# EUROPÄISCHE PATENTSCHRIFT

(11) **EP 3 967 891 B1**
(45) Veröffentlichungstag und Bekanntmachung des Hinweises auf die Patenterteilung: **28.01.2026**
(21) Anmeldenummer: 21186708.0
(22) Anmeldetag: 20.07.2021
(51) Int. Cl.: F16B 13/08

(54) **RAHMENBEFESTIGUNGSANORDNUNG, TÜR UND BEFESTIGUNGSMITTEL**
FRAME FASTENER ASSEMBLY, DOOR AND FASTENING MEANS
AGENCEMENT DE FIXATION DU CADRE, PORTE ET MOYEN DE FIXATION

(30) Priorität: 11.09.2020 DE 102020123775
(43) Veröffentlichungstag der Anmeldung: 16.03.2022
(73) Patentinhaber: Simonswerk GmbH, 33378 Rheda-Wiedenbrück (DE)
(72) Erfinder: Göldner, Frank, 48361 Beelen (DE)
(74) Vertreter: Andrejewski - Honke Patent- und Rechtsanwälte Partnerschaft mbB

(56) Entgegenhaltungen:
- EP-A1- 2 233 671
- DE-U1- 20 018 984
- DE-U1- 202018 101 497

## Beschreibung

Die Erfindung betrifft eine Rahmenbefestigungsanordnung, insbesondere für Türen, mit einem eine vordere Wand und eine hintere Wand aufweisenden Metallhohlprofil und mit einem daran angeordneten Befestigungsmittel. Das Metallhohlprofil ist vorzugsweise ein Strangprofil, wobei das Strangprofil aus Aluminium Bestandteil eines Türflügels oder einer Türzarge sein kann. Entsprechende Türen mit Profilen aus Aluminium oder auch Stahl werden häufig als Zimmertüren, Etagentüren, Zwischentüren oder auch als Haus- und Eingangstüren eingesetzt.

Für entsprechende Türen vorgesehene Türbänder werden von der Simonswerk GmbH unter dem Markennamen "ALPRO" vertrieben (siehe Simonswerk Bandtechnik, Handbuch 2012/2013, Seiten 410 bis 416).

Das Metallhohlprofil von Türzarge und/oder Türflügel zeichnet sich durch eine relativ hohe Stabilität aus, wobei jedoch die punktuell von dem Türband ausgeübten Kräfte in geeigneter Weise aufgenommen und verteilt werden müssen. Für eine entsprechende Befestigung sind vor diesem Hintergrund aus dem Stand der Technik unterschiedliche Ansätze bekannt.

Aus der EP 1 844 205 B1 ist eine Montageschraube mit einer Außenhülse und einem darin beweglichen Innenbolzen bekannt, Der Innenbolzen ist an seiner Vorderseite angeschrägt, um in eine Hinterwandöffnung des Metallhohlprofils eingebracht werden zu können. Der Innenbolzen ist mit einem Presssitz in der Außenhülse aufgenommen und erstreckt sich an einem zweiten Ende der Außenhülse aus dieser heraus. Die Außenhülse ist an einem ersten Ende mit einem Außengewinde versehen, um durch eine Schraubverbindung an einer Vorderwandöffnung des Metallhohlprofils verbunden zu werden. Der Innenbolzen ist in die Hinterwandöffnung lediglich hineingesteckt, um ein Verkippen zu verhindern. Damit sich ein Kopf des hineingesteckten Innenbolzens radial an der Hinterwandöffnung in der richtigen Tiefe abstützt, kann der in dem Presssitz in der Außenhülse aufgenommene Innenbolzen mittels geeigneter Schlag- oder Presswerkzeuge in die Außenhülse eingeschlagen bzw. eingepresst werden.

Die WO 2008/092 487 A1 offenbart eine Rahmenbefestigungsanordnung für Türen mit einem eine vordere Wand und eine hintere Wand aufweisenden Metallhohlprofil und mit einem eine Außenhülse und einen Innenbolzen aufweisenden Befestigungsmittel, wobei die Außenhülse in eine Vorderwandöffnung des Metallhohlprofils eingesetzt ist und in einer sich senkrecht zu der Vorderwand erstreckenden Axialrichtung an der Vorderwandöffnung gehalten ist, wobei der Innenbolzen an einem Außengewinde in einem Innengewinde der Außenhülse verstellbar aufgenommen ist. Der Innenbolzen kann durch die Verstellung mit einem sich erweiternden Fuß an der hinteren Wand abgestützt werden, um eine verbesserte Stabilität zu erreichen. Die Abstützung kann durch einen fließfähigen und/oder aushärtenden Stoff verbessert werden, wobei entsprechende Lösungen jedoch vergleichsweise aufwendig sind.

Die WO 02/38 897 A1 beschäftigt sich mit der Problemstellung, dass bei bestimmten Hohlprofilen mit einer geringen Tragkraft eine zusätzliche Metallarmierung innenliegend angeordnet ist. Eine Büchse nach Art eines Befestigungsmittels erstreckt sich dann durch Wände des wenig tragfähigen Hohlprofils bis zu einer vorderen Wand der Metallarmierung, welche dann im Wesentlichen für die gesamte Abstützung verantwortlich ist. Eine Abstützung an einer hinteren Wand der Metallarmierung ist nicht vorgesehen. Ein ähnlicher Ansatz ist auch aus der DE 27 00 100 A1 bekannt.

Die DE 20 2018 101 497 U1 offenbart eine Rahmenbefestigungsanordnung für eine Tür mit einem eine vordere Wand und eine hintere Wand aufweisenden Metallhohlprofil, wobei eine Einschraubhülse in eine Vorderwandöffnung des Metallprofils eingesetzt ist. Des Weiteren ist eine Montageschraube vorgesehen, welche einen Bandrollenabschnitt und einen daran anschließenden Gewindeabschnitt aufweist. Der Gewindeabschnitt erstreckt sich vollständig durch die Einschraubhülse hindurch und greift mit einem freien Ende in eine Hinterwandöffnung des Metallhohlprofils ein, wodurch sich eine Abstützung in axialer Richtung gegen die hintere Wand des Metallhohlprofils ergibt. Die DE 200 18 984 U1 offenbart ebenso ein Beispiel einer Rahmenbefestigungsanordnung.

Vor dem Hintergrund des Standes der Technik liegt der vorliegenden Erfindung die Aufgabe zugrunde, eine Rahmenbefestigungsanordnung anzugeben, welche sowohl leicht zu handhaben ist als auch langfristig gute Funktionseigenschaften aufweist. Des Weiteren sollen eine mit der Rahmenbefestigungsanordnung gebildete Tür sowie ein Befestigungsmittel für die Rahmenbefestigungsanordnung angegeben werden.

Gegenstand der Erfindung und Lösung der Aufgabe sind eine Rahmenbefestigungsanordnung gemäß Patentanspruch 1 sowie eine Tür gemäß Patentanspruch 12.

Die Erfindung betrifft demnach eine Rahmenbefestigungsanordnung, insbesondere für Türen, mit einem eine vordere Wand und eine hintere Wand aufweisenden Metallhohlprofil und mit einem eine Außenhülse und einen Innenbolzen aufweisenden Befestigungsmittel, wobei die Außenhülse in eine Vorderwandöffnung des Metallhohlprofils eingesetzt ist und in einer sich senkrecht zu der vorderen Wand erstreckenden Axialrichtung insbesondere formschlüssig an der Vorderwandöffnung gehalten ist, wobei der Innenbolzen mit einem Außengewinde in einem Innengewinde der Außenhülse verstellbar aufgenommen ist, wobei der Innenbolzen mit einem freien Ende in eine Hinterwandöffnung des Metallhohlprofils eingreift und sich in axialer Richtung gegen die hintere Wand abstützt und wobei eine Befestigungsschraube gegenüberliegend zu dem Innenbolzen von dem Innengewinde der Außenhülse aufgenommen ist..

Die Außenhülse und der Innenbolzen sind vorzugsweise im Wesentlichen zylindrisch. Ausgehend von einer zylindrischen Grundform können neben Gewinden an den Enden noch Anschrägungen, kleine Absätze, Werkzeugaufnahmen oder dergleichen vorgesehen sein.

Gemäß der vorliegenden Erfindung stützt sich das Befestigungsmittel sowohl an der vorderen Wand als auch an der hinteren Wand des Metallhohlprofils ab, wobei auch die vordere Wand mit der Vorderwandöffnung und die hintere Wand mit der Hinterwandöffnung versehen ist. Die beiden Wände verlaufen üblicherweise parallel zueinander, wobei die Außenhülse in der Ebene der vorderen Wand und der Innenbolzen in der Ebene der hinteren Wand formschlüssig gehalten sind. Zusätzlich ist senkrecht dazu entlang der Axialrichtung eine Abstützung und vorzugsweise Verspannung vorgesehen, welche das Befestigungsmittel innerhalb des Metallhohlprofils vorzugsweise auf Druck belastet und somit zu einer stabilen, spielfreien Abstützung beitragen kann. Insbesondere kann durch die Verstellbarkeit mit dem Außengewinde des Innenbolzens in Zusammenwirkung mit dem Innengewinde der Außenhülse die Kraft genau eingestellt werden. Für eine axiale Abstützung bzw. Verspannung kann beispielsweise an dem Innengewinde bei der Montage ein Drehmoment zwischen 1 Nm und 10 Nm vorgesehen sein.

Im Rahmen der Erfindung ist eine Ausgestaltung der Rahmenbefestigungsanordnung möglich, bei der das Befestigungsmittel nach Bedarf auch wieder gelöst wird. Des Weiteren kann durch die beschriebene Verstellung bei Wartungsarbeiten auch die Axialkraft leicht geprüft werden, wobei auch ein Nachspannen möglich ist.

Um beispielsweise ein Türband an das Metallhohlprofil anzuschließen, ist vorzugsweise noch zumindest eine separate Befestigungsschraube oder dergleichen vorgesehen, die dann mit dem bereits an dem Metallhohlprofil angeordneten Befestigungsmittel verbunden wird. Das Befestigungsmittel übernimmt dann die Funktion einer Aufnahme bzw. eines Dübels.

Durch die erfindungsgemäß vorgesehene Abstützung des Befestigungsmittels an der Vorderwandöffnung der vorderen Wand sowie der Hinterwandöffnung der hinteren Wand ergibt sich eine besonders vorteilhafte Abstützung hinsichtlich unterschiedlicher Belastungen und insbesondere auch gegen ein Verkippen der Befestigungsmittel, selbst wenn unter Last eine elastische Verformung des Metallhohlprofils nicht ausgeschlossen werden kann.

Gemäß einer bevorzugten Ausgestaltung der Erfindung ist vorgesehen, dass die Hinterwandöffnung kleiner als die Vorderwandöffnung ist. Sowohl die Hinterwandöffnung als auch die Vorderwandöffnung sind üblicherweise rund ausgeführt, wobei dann bei einer unterschiedlichen Größe der Unterschied des Durchmessers vorzugsweise zumindest 1 mm beträgt.

Dabei ist zu beachten, dass das gesamte Befestigungsmittel durch die Vorderwandöffnung in das Metallhohlprofil eingesetzt wird, so dass dadurch ein maximaler Durchmesser vorgegeben ist. Der zunächst zumindest teilweise in die Außenhülse eingesetzte Innenbolzen ist also auch entsprechend kleiner ausgeführt, wobei der Innenbolzen mit seinem freien Ende dann in die Hinterwandöffnung eingreifen soll, welche entsprechend kleiner auszuführen ist.

Bei der Vorbereitung des Metallhohlprofils kann beispielsweise zunächst mit einem kleineren Bohrer durch die Vorderwand hindurch die Hinterwandöffnung gebildet werden, wobei dann mit einem größeren Bohrer die entsprechend größere Vorderwandöffnung gebildet wird. Grundsätzlich ist auch die Erzeugung der Vorderwandöffnung sowie der Hinterwandöffnung mit einem Stufenbohrer oder dergleichen möglich.

Damit die Außenhülse in Axialrichtung, d. h. also senkrecht zu der vorderen Wand und üblicherweise auch senkrecht zu der hinteren Wand gehalten ist, ist in axialer Richtung ein Formschluss zwischen der Außenhülse und der vorderen Wand vorgesehen.

Auf besonders einfache Weise kann die Außenhülse mit einem Außengewinde versehen sein, wobei dann die Vorderwandöffnung als Gewindebohrung ausgeführt ist. Der Innenbolzen ist dann bei der Montage zweckmäßigerweise so weit in die Außenhülse eingeschraubt, dass die Außenhülse mit ihrem Außengewinde in der gewünschten Tiefe in die Vorderwandöffnung eingeschraubt werden kann.

Grundsätzlich ist nicht ausgeschlossen, dass die Außenhülse an ihrer dem Innenbolzen gegenüberliegenden Seite mit einem Bund oder Flansch versehen ist, der bei einem Einschrauben auch als Anschlag wirkt. Vorzugsweise ist jedoch vorgesehen, dass eine Stirnseite der Außenhülse flächenbündig mit einer Außenseite der vorderen Wand ist. Wenn die Außenhülse dann in der gewünschten Position angeordnet ist, erfolgt durch eine Betätigung des Innenbolzens die axiale Abstützung bzw. Verspannung des Befestigungsmittels, wodurch dieser in seiner Position stabilisiert wird. Wenn die Außenhülse wie zuvor beschrieben gemäß einer bevorzugten Ausgestaltung mit dem Außengewinde in der als Gewindebohrung ausgeführten Vorderwandöffnung gehalten ist, ergibt sich durch die axiale Verspannung auch eine gewisse Selbsthemmung, welche einem unbeabsichtigten Lösen der Außenhülse und somit des gesamten Befestigungsmittels entgegenwirkt.

Erfindungsgemäß greift der Innenbolzen mit seinem freien Ende in die Hinterwandöffnung des Metallprofils ein. Vor diesem Hintergrund ist es von Vorteil, wenn der Innenbolzen an seinem freien Ende einen Zentrierabschnitt mit einer Durchmesserverringerung aufweist, wobei dann der Zentrierabschnitt in die Hinterwandöffnung eingreift oder je nach Ausgestaltung die Hinterwandöffnung durchgreift.

So kann vorgesehen sein, dass der Zentrierabschnitt kegelförmig ist und lediglich in die Hinterwandöffnung eingreift. Der kegelförmige Zentrierabschnitt bildet dann auch eine Anlagefläche für die axiale Abstützung aus und liegt an einem Rand der Hinterwandöffnung an. Gerade, wenn die Hinterwandöffnung mit einer idealerweise an die Kegelform angepassten Einsenkung versehen ist, ergibt sich eine besonders gleichmäßige, flächige Anlage. Durch eine solche komplementäre Kegelform der Hinterwandöffnung einerseits und der Durchmesserverringerung andererseits wird auch eine gute, spielfreie Zentrierung und Fixierung erreicht.

Wie bereits zuvor erläutert, bewirkt die axiale Verspannung von Innenbolzen und Außenhülse innerhalb des Metallhohlprofils eine gewisse Selbsthemmung, so dass bei geeigneten Anzugsmomenten alleine dadurch eine Selbstsicherung erreicht werden kann. Grundsätzlich ist es aber auch möglich, den Zentrierabschnitt, insbesondere bei einer kegelförmigen Ausgestaltung, mit einer Rändelung oder einer ähnlichen Profilierung zu versehen, so dass durch eine solche Profilierung bei einem Verspannen eine Materialverformung und/oder ein Einschneiden erreicht werden, so dass auch dadurch eine besonders zuverlässige Sicherung erreicht werden kann.

Gemäß einer alternativen Ausgestaltung der Erfindung kann der Innenbolzen mit einer Stufe an einer Innenfläche der hinteren Wand anliegen, wobei dann das freie Ende des Innenbolzens die Hinterwandöffnung durchgreift. Durch die flächige Anlage an der Innenfläche der hinteren Wand können ebenfalls große Haltekräfte durch Reibung erzielt werden. Auch hier ist grundsätzlich eine Strukturierung oder auch die Einbringung eines Sicherungselementes nach Art eines Sprengringes oder dergleichen grundsätzlich möglich. Das freie Ende kann auch bei einer solchen Ausführungsform an seinen Rändern angeschrägt oder insgesamt kegelförmig verlaufen, um bei dem Herausschrauben des Innenbolzens aus der Außenhülse in Richtung der hinteren Wand eine gewisse Zentrierung zu ermöglichen. Optional kann an dem freien Ende auch ein Außengewinde vorgesehen sein, wobei dann die Hinterwandöffnung zweckmäßigerweise als Gewindebohrung ausgestaltet ist und ein Verschrauben erlaubt.

Um die Außenhülse und den Innenbolzen handhaben und insbesondere mit einer Schraubbewegung montieren bzw. verspannen zu können, sind entsprechende Werkzeugaufnahmen zweckmäßig. So ist gemäß einer bevorzugten Ausgestaltung der Erfindung vorgesehen, dass die Außenhülse eine innenliegende Werkzeugaufnahme aufweist, so dass durch die Werkzeugaufnahme die im Wesentlichen zylindrische Form an der Außenseite nicht beeinträchtigt wird. Insbesondere kann eine weibliche Aufnahme vorgesehen sein, welche einen Formschluss ermöglicht. Die Werkzeugaufnahme kann insbesondere eine Vielkantform, eine Sternform oder dergleichen aufweisen.

Auch der Innenbolzen weist an seiner durch die Außenhülse zugänglichen Seite eine Werkzeugaufnahme auf. Neben einem einfachen Schlitz oder Kreuzschlitz sind selbstverständlich auch übliche weibliche Aufnahmeformen mit einem Polygon oder mit einer Stern-Struktur möglich.

Die Außenhülse ermöglicht die formschlüssige Verbindung mit der vorderen Wand und nimmt des Weiteren den Innenbolzen auf. Um hinsichtlich der axialen Verspannung einen gewissen Stellweg zu ermöglichen, ist eine ausreichende Länge der Außenhülse notwendig. Der Stellweg ergibt sich letztlich zwischen einer maximalen sowie einer minimalen Überlappung von Außenhülse und Innenbolzen. Dabei ist zu beachten, dass im verspannten Zustand bei allen Profilgrößen noch eine ausreichende Überlappung vorhanden sein muss, um den Innenbolzen zuverlässig an der Außenhülse abzustützen.

Erfindungsgemäß ist das Innengewinde der Außenhülse auch für die Aufnahme einer separaten Befestigungsschraube vorgesehen. Entsprechend muss auch bei einem vergleichsweise kleinen Metallhohlprofil eine ausreichende Einschraubtiefe für eine solche Befestigungsschraube vorhanden sein.

Vor diesem Hintergrund kann die Außenhülse beispielsweise eine Länge zwischen 15 mm und 40 mm aufweisen. Der Innenbolzen kann beispielsweise eine Länge zwischen 20 mm und 50 mm aufweisen. Der Abstand zwischen der vorderen Wand und der hinteren Wand kann beispielsweise zwischen 30 mm und 70 mm betragen.

Grundsätzlich können für unterschiedliche Metallhohlprofile auch unterschiedliche Außenhülsen und Innenbolzen bereitgestellt werden. In vielen Fällen ist es dabei ausreichend, wenn bei einer in ihrer Konstruktion und Länge einheitlichen Außenhülse für unterschiedliche Metallhohlprofile lediglich Innenbolzen mit einer angepassten Länge bereitgestellt werden. Dabei ergibt sich auch der Vorteil, dass die Innenbolzen konstruktiv einfach ausgestaltet sind, wobei grundsätzlich auch eine nachträgliche Kürzung des Innenbolzens nicht ausgeschlossen ist.

Wie bereits zuvor erläutert, ist die Rahmenbefestigungsanordnung insbesondere für eine Tür vorgesehen. So kann beispielsweise ein Türband mit der Befestigungsschraube gegenüberliegend zu dem Innenbolzen von dem Innengewinde der Außenhülse aufgenommen sein.

Um ein Türband gleichmäßig abzustützen, sind vorzugsweise zumindest zwei Befestigungsschrauben vorgesehen, die dann in der beschriebenen Weise mit einem jeweils zugeordneten Befestigungsmittel zusammenwirken. Wenn dann im Rahmen der Erfindung ein Türflügel mit zwei Türbändern an einer Türzarge befestigt ist, ergeben sich an der Türzarge und/oder an dem Türflügel jeweils zumindest vier Befestigungsstellen mit jeweils einer Befestigungsschraube und einem Befestigungsmittel. Wie aus dem Stand der Technik bekannt ist, sind häufig sowohl die Türzarge als auch ein Rahmen oder Rand des Türflügels jeweils von einem Metallhohlprofil gebildet, so dass auf beiden Seiten dann die gleiche Art der Befestigung erfolgen kann.

Ausgehend von der exemplarisch beschriebenen Anordnung ist klar, dass je nach Bedarf ein Türflügel auch mit mehr als zwei Türbändern befestigt werden kann, wobei auch für jedes einzelne Türband mehr als zwei Befestigungsstellen an der Türzarge und/oder dem Türflügel vorgesehen sein können. Die zuvor beschriebene Tür ist Gegenstand des nebengeordneten Patentanspruches 12.

Die Erfindung wird nachfolgend anhand von exemplarischen Zeichnungen erläutert. Es zeigen:
- Fig. 1: eine Rahmenbefestigungsanordnung,
- Fig. 2: die Rahmenbefestigungsanordnung gemäß der Fig. 1 in einem horizontalen Schnitt,
- Fig. 3: unterschiedliche Innenbolzen für ein Befestigungsmittel gemäß der Figuren 1 und 2,
- Fig. 4a, 5a, 6a: alternative Ausgestaltungen von Befestigungsmittel
- Fig. 4b, 5b, 6b: Rahmenbefestigungsanordnungen mit den jeweils zugeordneten Befestigungsmitteln,
- Fig. 7: eine Tür mit der Rahmenbefestigungsanordnung.

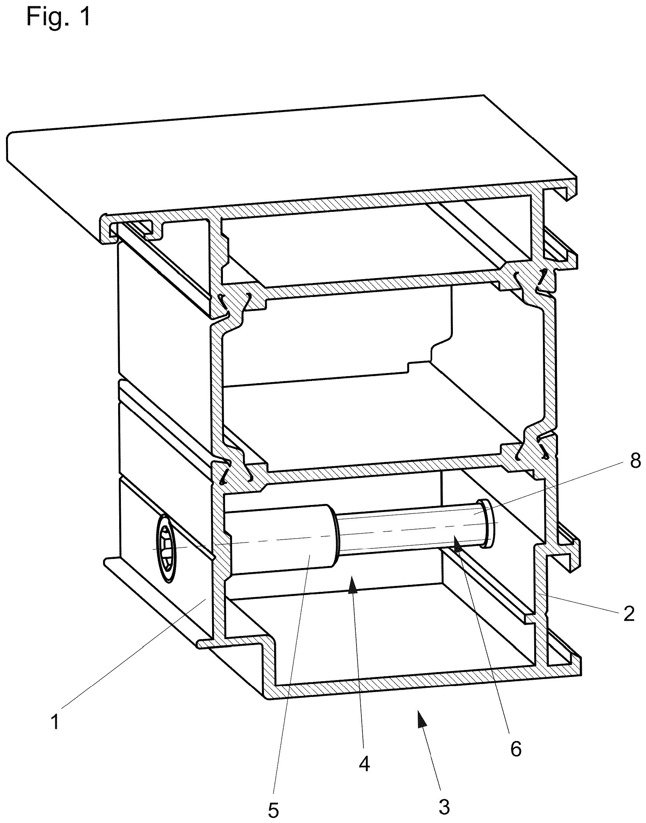

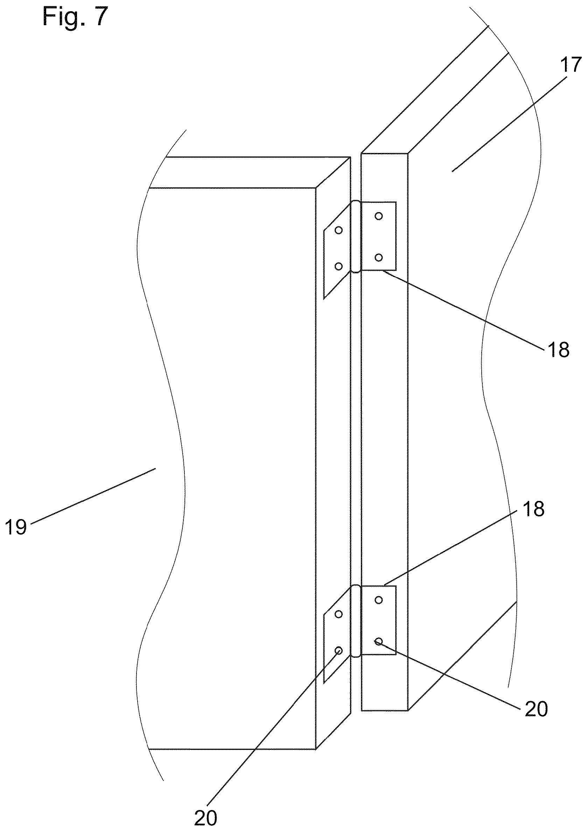

Die Fig. 1 zeigt eine Rahmenbefestigungsanordnung für eine Tür (siehe Fig. 7) mit einem eine vordere Wand 1 und eine hintere Wand 2 aufweisenden Metallhohlprofil 3. Das Metallhohlprofil 3 kann beispielsweise als Strangprofil aus Aluminium gebildet sein.

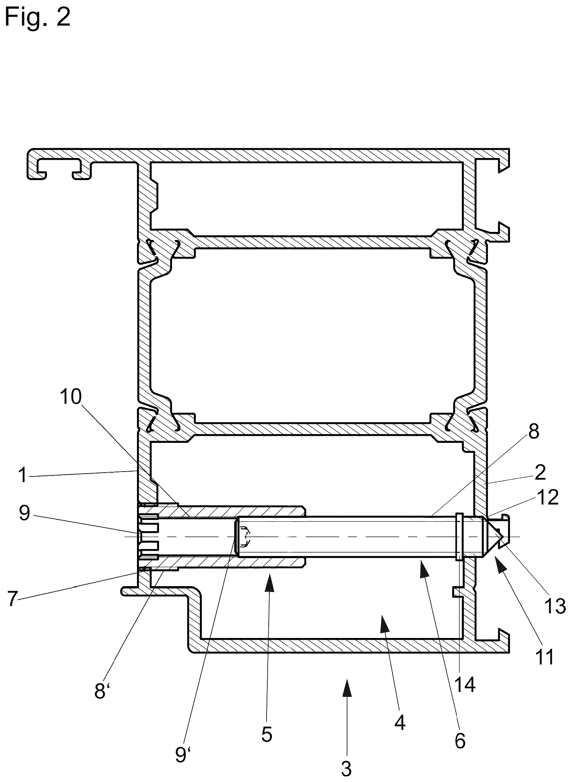

Die Rahmenbefestigungsanordnung umfasst des Weiteren ein Befestigungsmittel 4 mit einer Außenhülse 5 und einem Innenbolzen 6. Bereits in der Fig. 1 ist zu erkennen, dass sich das Befestigungsmittel 4 mit Außenhülse 5 und Innenbolzen 6 sowohl an der vorderen Wand 1 als auch an der hinteren Wand 2 des Metallhohlprofils 3 abstützt. Weitere Details sind in diesem Zusammenhang der Fig. 2 zu entnehmen.

Gemäß der Fig. 2 ist die Außenhülse 5 in eine Vorderwandöffnung 7 der vorderen Wand 1 eingesetzt. Konkret ist die Vorderwandöffnung 7 als Gewindebohrung ausgeführt, wobei die Außenhülse 5 mit einem Außengewinde 8' in die Vorderwandöffnung 7 so eingeschraubt ist, dass eine Stirnseite der Außenhülse 5 flächenbündig mit einer Außenseite der vorderen Wand 1 ist. Des Weiteren ist zu erkennen, dass die Außenhülse 5 eine innenliegende Werkzeugaufnahme 9 und ein Innengewinde 10 aufweist. Bis auf das Außengewinde 8', die Werkzeugaufnahme 9 und das Innengewinde 10 weist die Außenhülse 5 die Form eines Hohlzylinders auf.

Der Innenbolzen 6 weist ein Außengewinde 8 auf, welches von dem Innengewinde 10 der Außenhülse 5 aufgenommen ist, so dass der Innenbolzen 6 innerhalb der Außenhülse 5 durch eine Schraubbewegung verstellbar ist. Zu diesem Zweck weist auch der Innenbolzen 6 an seiner durch die Außenhülse 5 zugänglichen Seite eine Werkzeugaufnahme 9' auf.

Gemäß dem in der Fig. 2 dargestellten montierten Zustand greift der Innenbolzen 6 mit einem freien Ende 11 in eine Hinterwandöffnung 12 der hinteren Wand 2 ein. Auf diese Weise erfolgt eine Abstützung in axialer Richtung gegen die hintere Wand 2. Das Befestigungsmittel 4 ist somit an der vorderen Wand 1 und an der hinteren Wand 2 besonders stabil und zuverlässig gehalten, so dass dann nachfolgend in dem freien Bereich des Innenbolzens 6 eine weitere Befestigungsschraube 20 aufgenommen werden kann.

Im Rahmen der Erfindung ergeben sich unterschiedliche Ausgestaltungsmöglichkeiten für das freie Ende 11 des Innenbolzens 6. So ist gemäß der Fig. 2 an dem freien Ende 11 eine kegelförmige Durchmesserverringerung 13 vorgesehen, bevor ein kurzer gerader Abschnitt mit Außengewinde 8 anschließt. Es schließt dann in Richtung der Außenhülse 5 ein radialer Kragen 14 an, der einen Anschlag bildet.

Wenn gemäß der Ausführungsform nach Fig. 2 auch an dem freien Ende 11 das Außengewinde 8 vorgesehen ist, ist entsprechend die Hinterwandöffnung 12 ebenfalls als Gewindebohrung auszuführen. Wenn dann der Innenbolzen 6 in Richtung der hinteren Wand 2 aus der Außenhülse 5 herausgeschraubt und mit seinem freien Ende 11 in die Hinterwandöffnung 12 eingeschraubt wird, so ergibt sich eine axiale Fixierung und Verspannung des Befestigungsmittels 4. Wenn dann jedoch der radiale Kragen 14 an der Innenseite der hinteren Wand 2 anschlägt, ist ein weiteres Herausschrauben des Innenbolzens 6 aus der Außenhülse 5 nicht möglich, so dass dann auch Verformungen des Metallhohlprofils 3 durch zu große Schraubkräfte vermieden werden können.

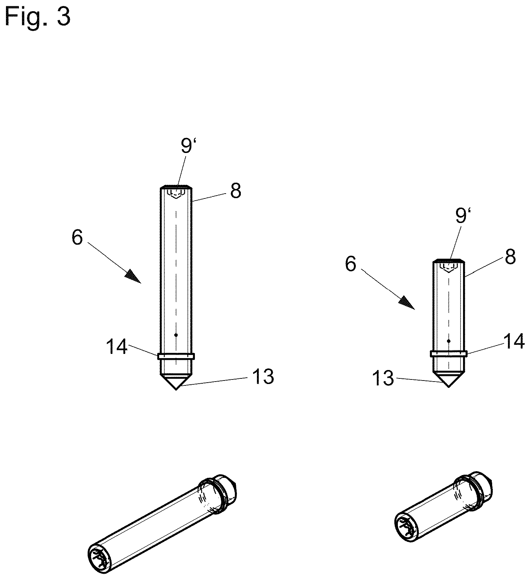

Bereits aus der Fig. 2 ist zu erkennen, dass auch im montierten Zustand eine ausreichende Überdeckung des Innengewindes 10 der Außenhülse 5 sowie des Außengewindes 8 des Innenbolzens 6 vorhanden sein sollen, um die gewünschte Stabilität sicherzustellen. Eine gewisse Längenanpassung ist dann durch ein unterschiedliches Ein- und Ausschrauben des Innenbolzens 6 bezüglich der Außenhülse 5 möglich. Bei größeren Maßabweichungen kann es für unterschiedliche Metallhohlprofile 3 jedoch auch zweckmäßig sein, unterschiedlich lange Außenhülsen 5 und/oder Innenbolzen 6 bereitzustellen. Konstruktionsbedingt ist gerade der Austausch bzw. das Bereithalten unterschiedlicher Innenbolzen 6 leicht möglich, wie dies in der Fig. 3 exemplarisch dargestellt ist.

Gemäß der Fig. 2 ist eine Ausgestaltung dargestellt, bei der der Innenbolzen 6 an dem freien Ende 11 ein Außengewinde aufweist, wobei eine solche Ausgestaltung lediglich optional ist. Es ergibt sich der Vorteil, dass eine Verformung des Metallhohlprofils 3 vermieden wird, wobei andererseits jedoch auch die axialen Spannkräfte begrenzt sind. Gerade im Hinblick auf die hohe Stabilität von Metallhohlprofilen kann es deswegen zweckmäßig sein, wenn gemäß alternativen Ausgestaltungen der Erfindung die Hinterwandöffnung nicht als Gewindebohrung ausgeführt ist, so dass dort der Innenbolzen 6 soweit eingesteckt werden kann, bis durch die Verspannung des gesamten Befestigungsmittels 4 zwischen der vorderen Wand 1 und der hinteren Wand 2 gewünschte bzw. geeignete Axialkräfte erreicht werden.

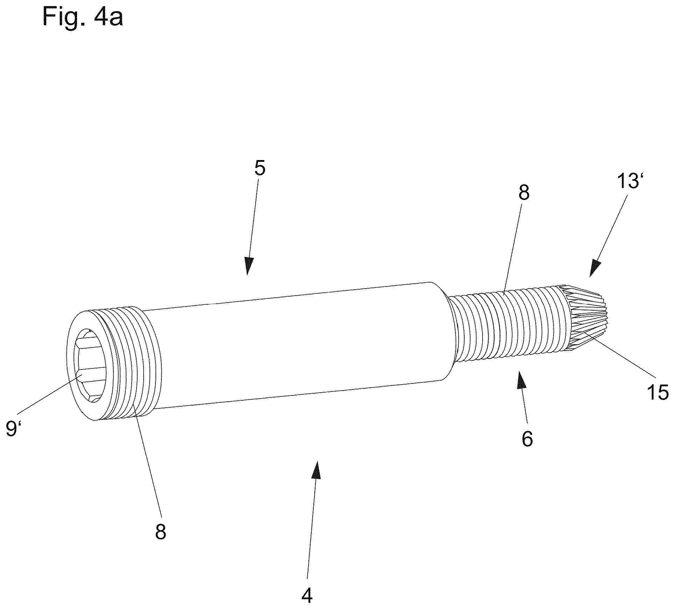

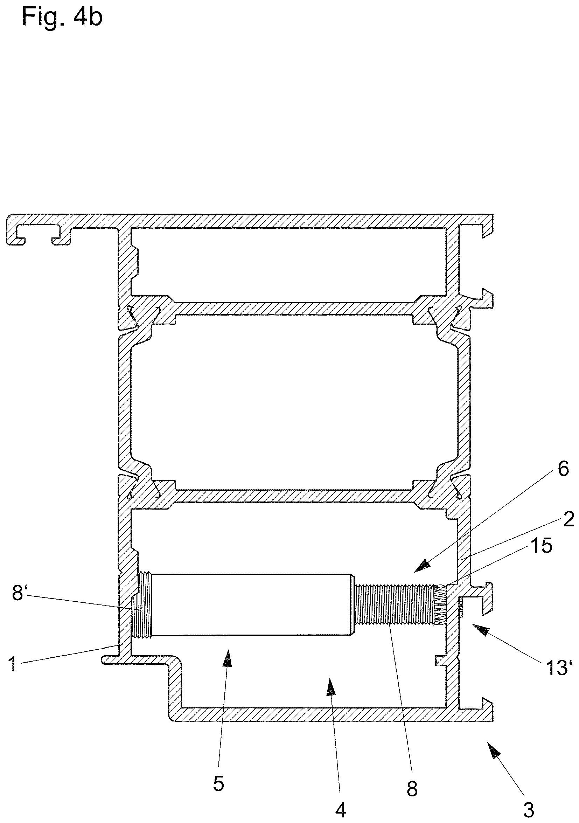

Vor diesem Hintergrund zeigt die Fig. 4a eine alternative Ausgestaltung des Befestigungsmittels 4, wobei auch hier der Innenbolzen 6 an seinem freien Ende 11 eine Durchmesserverringerung 13', aufweist. An der Durchmesserverringerung 13' ist eine Rändelung 15 vorgesehen. Der von der Durchmesserverringerung 13' gebildete Zentrierabschnitt liegt dann gemäß der Fig. 4b unmittelbar an einem Rand der Hinterwandöffnung 12 an, welche zweckmäßigerweise auch kegelförmig angesenkt sein kann. Die den Zentrierabschnitt bildende Durchmesserverringerung 13' greift somit lediglich in die Hinterwandöffnung 12 ein. Durch die Rändelung 15 kann dabei eine Selbsthemmung durch eine plastische Materialverformung bzw. ein Einschneiden erreicht werden.

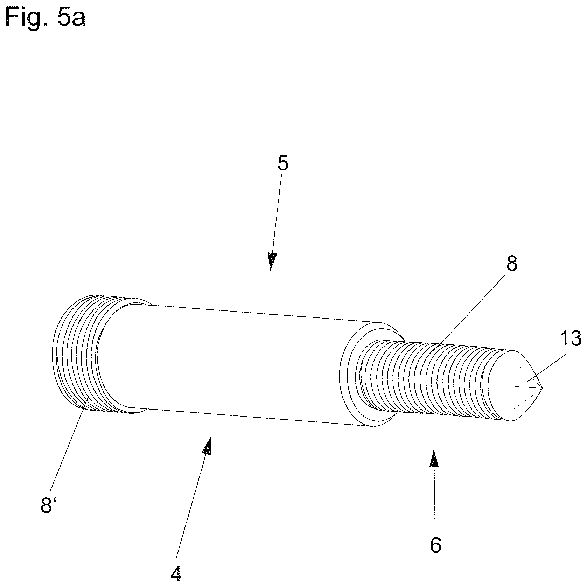

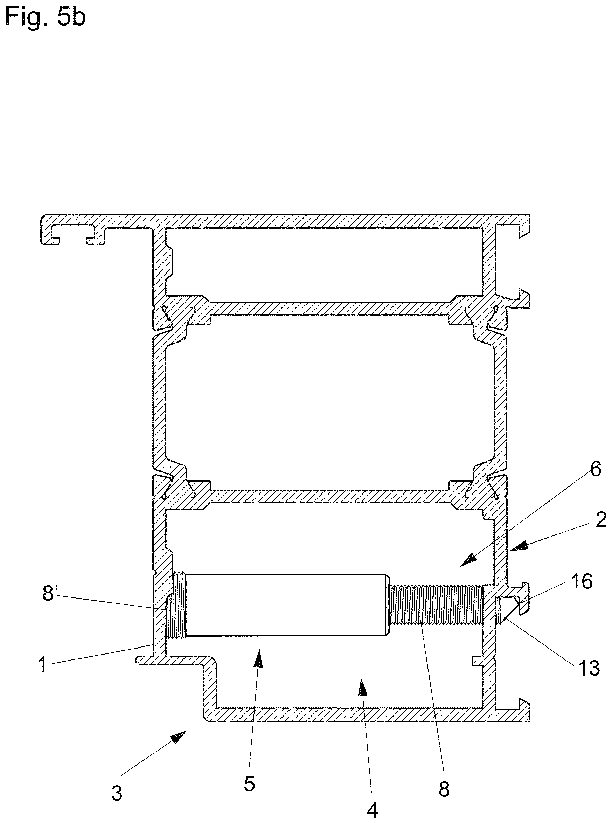

Die Fig. 5a zeigt eine weitere alternative Ausgestaltung des Befestigungsmittels, welches über eine einfache kegelförmige Durchmesserverringerung 13 an dem freien Ende 11 des Innenbolzens 6 verfügt. Gemäß der Fig. 5b erfolgt die axiale Abstützung gegenüber der hinteren Wand 2 über einen zusätzlichen Steg 16 der hinteren Wand 2.

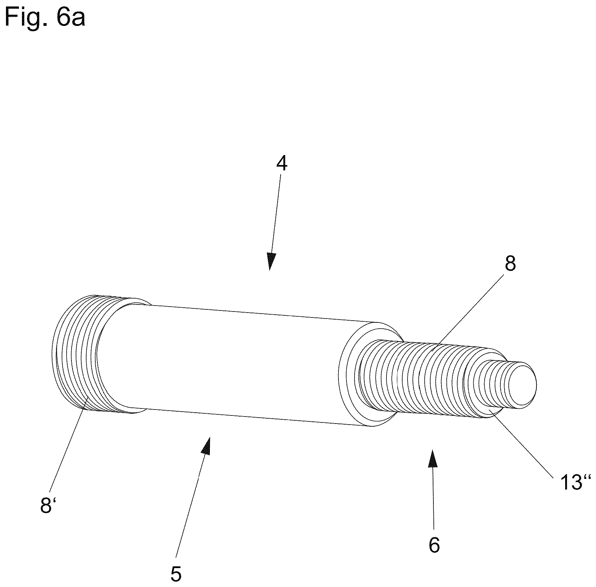

Die Fig. 6a zeigt eine Ausgestaltung des Befestigungsmittels 4, wobei an dem freien Ende 11 des Innenbolzens 6 eine Durchmesserverringerung 13" in Form einer ebenfalls mit einem Gewinde ausgeführten Stufe vorgesehen ist.

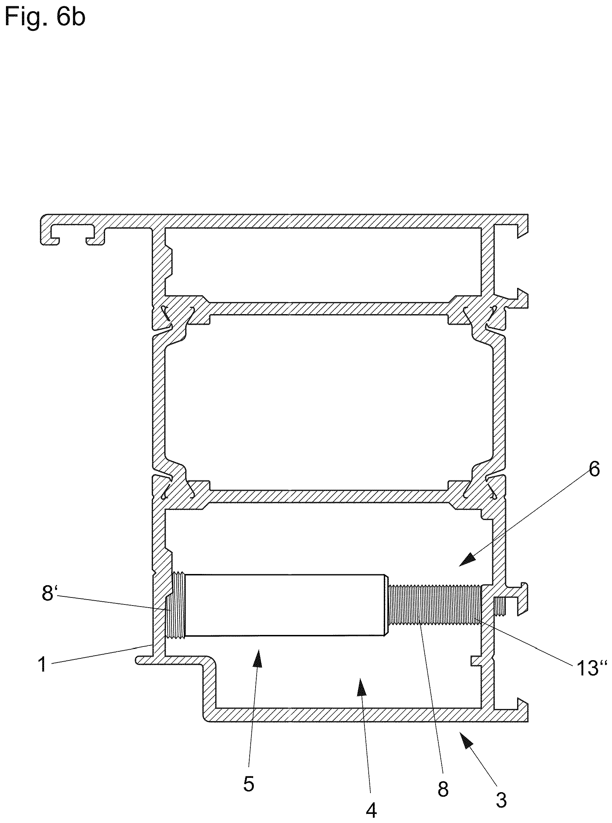

Gemäß der Fig. 6b durchgreift dann das freie Ende 11 die zugeordnete, als Gewindebohrung ausgestaltete Hinterwandöffnung 12 unter Ausbildung einer Schraubverbindung so weit, dass die Durchmesserverringerung 13" in Form der Stufe an der Innenseite der hinteren Wand 2 flächig anliegt, wodurch dort vergleichsweise große Kräfte aufgebracht werden können. Grundsätzlich ist auch an dieser Kontaktfläche eine Aufrauhung oder auch die Einbringung eines Sprengringes oder dergleichen möglich.

Alternativ ist es auch möglich, an dem Innenbolzen 6 bei einer Ausgestaltung entsprechend der Fig. 6a und Fig. 6b an dem freien Ende 11 keine Gewinde vorzusehen, so dass dann die Fixierung im Wesentlichen durch das axiale Verspannen erfolgt und ggf. auch größere Axialkräfte erzeugt werden können.

Die Fig. 7 zeigt rein exemplarisch eine mögliche Einbausituation mit einem Türflügel 17, der mit zwei Türbändern 18 an einer Türzarge 19 schwenkbeweglich gehalten ist. Sowohl der Türflügel 17 als auch die Türzarge 19 weisen das zuvor dargestellte Metallhohlprofil 3 auf, wobei sowohl an dem Türflügel 17 als auch an der Türzarge 19 exemplarisch jeweils zwei Befestigungsschrauben 20 vorgesehen sind. Jeder Befestigungsschraube 20 ist ein Befestigungsmittel 4 zugeordnet, welches wie zuvor beschrieben ausgeführt ist.

## Patentansprüche

1. Rahmenbefestigungsanordnung, insbesondere für Türen, mit einem eine vordere Wand (1) und eine hintere Wand (2) aufweisenden Metallhohlprofil (3) und mit einem eine Außenhülse (5) und einen Innenbolzen (6) aufweisenden Befestigungsmittel (4), wobei die Außenhülse (5) in eine Vorderwandöffnung (7) des Metallhohlprofils (3) eingesetzt ist und in einer sich senkrecht zu der vorderen Wand (1) erstreckenden Axialrichtung an der Vorderwandöffnung (7) gehalten ist, wobei der Innenbolzen (6) mit einem Außengewinde (8) in einem Innengewinde (10) der Außenhülse (5) verstellbar aufgenommen ist, wobei der Innenbolzen (6) mit einem freien Ende (11) in eine Hinterwandöffnung (12) des Metallhohlprofils (3) eingreift und sich in Axialrichtung gegen die hintere Wand (2) abstützt und wobei eine Befestigungsschraube (20) gegenüberliegend zu dem Innenbolzen (6) von dem Innengewinde (10) der Außenhülse (5) aufgenommen ist.

2. Rahmenbefestigungsanordnung nach Anspruch 1, wobei die Hinterwandöffnung (12) kleiner als die Vorderwandöffnung (7) ist.

3. Rahmenbefestigungsanordnung nach Anspruch 1 oder 2, wobei die Außenhülse (5) mit einem Außengewinde (8') in der als Gewindebohrung ausgeführten Vorderwandöffnung (7) gehalten ist.

4. Rahmenbefestigungsanordnung nach einem der Ansprüche 1 bis 3, wobei der Innenbolzen (6) an seinem freien Ende (11) einen Zentrierabschnitt mit einer Durchmesserverringerung (13, 13', 13") aufweist, welcher in die Hinterwandöffnung (12) eingreift oder die Hinterwandöffnung (12) durchgreift.

5. Rahmenbefestigungsanordnung nach Anspruch 4, wobei der Zentrierabschnitt kegelförmig in die Hinterwandöffnung (12) eingreift und an einem Rand der Hinterwandöffnung (12) anliegt.

6. Rahmenbefestigungsanordnung nach Anspruch 5, wobei der Zentrierabschnitt eine Rändelung (15) aufweist

7. Rahmenbefestigungsanordnung nach Anspruch 4, wobei der Innenbolzen (6) mit einer Stufe an einer Innenfläche der hinteren Wand (2) anliegt.

8. Rahmenbefestigungsanordnung nach einem der Ansprüche 1 bis 7, wobei die Außenhülse (5) eine innenliegende Werkzeugaufnahme (9) aufweist.

9. Rahmenbefestigungsanordnung nach einem der Ansprüche 1 bis 8, wobei die Außenhülse (5) eine Länge zwischen 15 mm und 40 mm und der Innenbolzen (6) eine Länge zwischen 20 mm und 50 mm aufweist, wobei der Abstand zwischen der vorderen Wand (1) und der hinteren Wand (2) zwischen 30 mm und 70 mm beträgt.

10. Rahmenbefestigungsanordnung nach einem der Ansprüche 1 bis 9, wobei eine Stirnseite der Außenhülse (5) flächenbündig mit einer Außenseite der vorderen Wand (1) ist.

11. Rahmenbefestigungsanordnung nach einem der Ansprüche 1 bis 10, wobei mit der Befestigungsschraube (20) ein Türband (18) an dem Metallhohlprofil (3) befestigt ist.

12. Tür mit einem Türflügel (17), einer Türzarge (19) und mit zwei Türbändern (18), mit denen der Türflügel (17) schwenkbeweglich an der Türzarge (19) gehalten ist, wobei die Türbänder (18) mit einer Rahmenbefestigungsanordnung nach einem der Ansprüche 1 bis 11 an dem Türflügel (17) und/oder der Türzarge (19) befestigt sind.

## Claims

1. A frame fastener assembly, in particular for doors, with a hollow metal profile (3) having a front wall (1) and a rear wall (2) and with a fastening means (4) having an outer sleeve (5) and an inner bolt (6), wherein the outer sleeve (5) is inserted into a front wall opening (7) of the hollow metal profile (3) and is held on the front wall opening (7) in an axial direction extending perpendicular to the front wall (1), wherein the inner bolt (6) is adjustably received with an external thread (8) in an internal thread (10) of the outer sleeve (5), wherein the inner bolt (6) engages with a free end (11) with a rear wall opening (12) of the hollow metal profile (3) and supports itself against the rear wall (2) in the axial direction and wherein, lying opposite to the inner bolt (6), a fastening screw (20) is received by the internal thread (10) of the outer sleeve (5).

2. The frame fastener assembly according to claim 1, wherein the rear wall opening (12) is smaller than the front wall opening (7).

3. The frame fastener assembly according to claim 1 or 2, wherein the outer sleeve (5) is held with an external thread (8') in the front wall opening (7) embodied as threaded bore.

4. The frame fastener assembly according to one of claims 1 to 3, wherein on its free end (11) the inner bolt (6) has a centering section with a diameter reduction (13, 13', 13"), which engages with the rear wall opening (12) or engages through the rear wall opening (12).

5. The frame fastener assembly according to claim 4, wherein the centering section engages in a conical manner with the rear wall opening (12) and abuts against an edge of the rear wall opening (12).

6. The frame fastener assembly according to claim 5, wherein the centering section has a knurling (15).

7. The frame fastener assembly according to claim 4, wherein the inner bolt (6) abuts with a step against an inner surface of the rear wall (2).

8. The frame fastener assembly according to one of claims 1 to 7, wherein the outer sleeve (5) has an internal tool receptacle (9).

9. The frame fastener assembly according to one of claims 1 to 8, wherein the outer sleeve (5) has a length between 15 mm and 40 mm and the inner bolt (6) has a length between 20 mm and 50 mm, wherein the distance between the front wall (1) and the rear wall (2) is between 30 mm and 70 mm.

10. The frame fastener assembly according to one of claims 1 to 9, wherein a front side of the outer sleeve (5) is flush-mounted with an outer side of the front wall (1).

11. The frame fastener assembly according to one of claims 1 to 10, wherein a door hinge (18) is fastened to the hollow metal profile (3) by means of the fastening screw (20).

12. A door with a door leaf (17), a door case (19) and with two door hinges (18), by means of which the door leaf (17) is held in a pivotably movable manner on the door case (19), wherein the door hinges (18) are fastened to the door leaf (17) and/or the door case (19) by means of a frame fastener assembly according to one of claims 1 to 11.

## Revendications

1. Ensemble de fixation de cadre, destiné notamment à des portes, doté d'un profilé (3) métallique creux comportant une paroi avant (1) et une paroi arrière (2) et doté d'un moyen de fixation (4) comportant une douille extérieure (5) et un boulon intérieur (6), la douille extérieure (5) étant insérée dans un orifice (7) de paroi avant du profilé (3) métallique creux et étant maintenue sur l'orifice (7) de paroi avant dans une direction axiale s'étendant à la perpendiculaire de la paroi avant (1), le boulon intérieur (6) étant réceptionné de manière ajustable par un filetage (8) dans un taraudage (10) de la douille extérieure (5), le boulon intérieur (6) s'engageant par une extrémité (11) libre dans un orifice (12) de paroi arrière du profilé (3) métallique creux et s'appuyant dans la direction axiale contre la paroi arrière (2) et une vis de fixation (20) étant réceptionnée au vis-à-vis du boulon intérieur (6) par le taraudage (10) de la douille extérieure (5).

2. Ensemble de fixation de cadre selon la revendication 1, l'orifice (12) de paroi arrière étant plus petit que l'orifice (7) de paroi avant.

3. Ensemble de fixation de cadre selon la revendication 1 ou 2, la douille extérieure (5) étant maintenue par un filetage (8') dans l'orifice (7) de paroi avant réalisé sous la forme d'un alésage taraudé.

4. Ensemble de fixation de cadre selon l'une quelconque des revendications 1 à 3, le boulon intérieur (6) comportant sur son extrémité (11) libre un tronçon de centrage doté d'un rétrécissement de diamètre (13, 13', 13"), lequel s'engage dans l'orifice (12) de paroi arrière ou traverse l'orifice (12) de paroi arrière.

5. Ensemble de fixation de cadre selon la revendication 4, le tronçon de centrage s'engageant sous forme cunéiforme dans l'orifice (12) de paroi arrière et étant adjacent à un bord de l'orifice (12) de paroi arrière.

6. Ensemble de fixation de cadre selon la revendication 5, le tronçon de centrage comportant un moletage (15).

7. Ensemble de fixation de cadre selon la revendication 4, le boulon intérieur (6) étant adjacent par un échelon à une surface intérieure de la paroi arrière (2).

8. Ensemble de fixation de cadre selon l'une quelconque des revendications 1 à 7, la douille extérieure (5) comportant un logement d'outil (9) interne.

9. Ensemble de fixation de cadre selon l'une quelconque des revendications 1 à 8, la douille extérieure (5) présentant une longueur comprise entre 15 mm et 40 mm et le boulon intérieur (6) présentant une longueur comprise entre 20 mm et 50 mm, l'écart entre la paroi avant (1) et la paroi arrière (2) étant compris entre 30 mm et 70 mm.

10. Ensemble de fixation de cadre selon l'une quelconque des revendications 1 à 9, une face frontale de la douille extérieure (5) affleurant une face extérieure de la paroi avant (1).

11. Ensemble de fixation de cadre selon l'une quelconque des revendications 1 à 10, à l'aide de la vis de fixation (20), une paumelle (18) étant fixée sur le profilé (3) métallique creux.

12. Porte, dotée d'un battant (17) de porte, d'un chambranle (19) de porte et dotée de deux paumelles (18), à l'aide desquelles le battant (17) de porte est maintenu de manière mobile en pivotement sur le chambranle (19) de porte, les paumelles (18) étant fixées à l'aide d'un ensemble de fixation de cadre selon l'une quelconque des revendications 1 à 11 sur le battant (17) de porte et / ou sur le chambranle (19) de porte.
